# EUROPEAN PATENT SPECIFICATION

(11) **EP 0 745 164 B1**
(45) Date of publication and mention of the grant of the patent: **23.05.2001**
(21) Application number: 95909580.3
(22) Date of filing: 16.02.1995
(51) Int. Cl.: E01F 9/053, E01C 7/35, B63B 22/16, E02B 3/04, E02B 3/20, B05D 3/10, B05D 3/12, B05D 5/06, E01F 9/04

(54) **SURFACE FINISH OF CEMENTITOUS NATURE AND CONTAINING GLASS BEADS**
ZEMENTARTIGE OBERFLÄCHENBESCHICHTUNG MIT GLASKUGELN
REVETEMENT DE SURFACE A BASE DE CIMENT RENFERMANT DES BILLES DE VERRE

(30) Priority: 16.02.1994 AU PM388794
(43) Date of publication of application: 04.12.1996
(73) Proprietor: Kelly, Luke Gregory, Carlton, NSW 2218 (AU)
(72) Inventor: Kelly, Luke Gregory, Carlton, NSW 2218 (AU)
(74) Representative: Boydell, John Christopher
(86) International application number: AU9500075
(87) International publication number: WO9522662

(56) References cited:
- EP-A- 0 518 854
- WO-A-93/18233
- AU-A- 6 691 165
- CH-A- 562 372
- DE-A- 2 457 766
- FR-A- 726 252
- FR-A- 859 180
- FR-A- 2 170 043
- GB-A- 905 988
- GB-A- 1 397 737
- GB-A- 2 255 099
- US-A- 3 171 335
- US-A- 4 579 891

## Description

The present invention relates to surface finishes for pathways, walls, swimming pools and other structures and more particularly relates to a surface finish which is of a cementitious nature and which includes at least one aggregate type comprising glass beads. More particularly, the invention relates to a mix forming and to a method of producing the finishes.

In the building industry there has been prolific use of aggregate surfaces for paving footpaths, surfacing of prefabricated building panels and slabs to provide attractive and functional facades and in and around swimming pools and the like. The known aggregate mixes have invariably utilised aggregate materials which include stones, pebbles and the like mixed in a matrix of cementitious material selected from cement or resin.

The selection of pebbles and stones as the aggregate material usually dictates the appearance of the finish particularly with respect to its colour and texture. When resins are used, the aggregate provides the final surface coloration as the cementitious resins are generally clear. An alternative surface coating may be formed by using coloured mortar with pebbles and stones.

Despite the use of a wide range of aggregates to produce a variety of surface finishes, for example EP 0518854, successfully preparing a cementitious surface matrix using as the aggregate material glass beads either alone or with another aggregate materials selected from precious or semi-precious stones, sands, quartz, marble, granites and the like has been difficult to achieve. It was previously thought to be unsatisfactory to attempt to use other than conventional aggregates in hard wearing surface finishes as the bonding achieved was inferior compared with conventional aggregates. In the building industry it has been considered unwise to use materials such as glass beads as aggregate as the glass is generally considered to be insufficiently porous or rough enough to establish an effective bond. The bond is also compromised by alkalinity bleed out from the glass beads.

The present invention overcomes the effective use of alternative aggregates and particularly glass beads in which the problems of poor bonding known in the prior art aggregates is overcome.

According to a first aspect of the invention, there is provided a surface finish for application to a substrate surface of a structure or object such as pathways, swimming pools or the like wherein the surface is disposed vertically, horizontally or is sloped, the surface finish comprising a matrix formed from a combination of a cementitious material, water, glass beads and an adhesive;
wherein the glass beads are the same diameter or a blend of at least two different diametric sizes selected from the range 0.1 mm to 200 mm in diameter
the invention being characterised by a proportion of the surface area of the glass beads being hidden in the cementitious material with the remainder visible above the surface such that between 30% - 60% of the surface area of each bead is visible above the surface of the cementitious material; said adhesive comprising a blend of a polymeriser and a siliconiser that enhances the adhesion between glass beads and cementitious material said glass beads interlocking proximate adjacent beads within the matrix so as to provide resistance against abrasion and tensile, bending and compression forces applied to said matrix by such influences as human and vehicular traffic.

In the preferred embodiment, the surface finish comprises a blended matrix of cementitious mortar, an aggregate of said glass beads of the same or different sizes used alone or in conjunction with other aggregates selected from precious stones, semi-precious stones or raw stones and liquid adhesive comprising a combination of a siliconiser and polymeriser for enhancing the bond between the cementitious mortar and glass beads.

The finish may be applied to the surface of a structure such as a building facade, as a paving surface or simply to almost any object formed from a material capable of forming a bond with the finish.

The consistency and/or blend of the matrix may be varied according to the nature of the substrate surface to which the surface coating is applied. Thus the mix will vary according to whether or not the surface is horizontal, vertical or sloped and according to the type of material which forms the substrate. For instance, application of the finish to a vertical surface requires the mix to bind to the surface and this is achieved by ensuring that the mix assumes the right paste consistency.

A method of preparing a surface finish on the surface of a structure or object such as a road, and a runway or the like wherein the surface is disposed vertically, horizontally or is sloped, comprising the steps of;
selecting a cementitious material;
selecting glass beads from within the size range of 0.1 mm to 200 mm diameter;
mixing the cementitious material with the selected bead sizes, water and an adhesive to form a matrix of a predetermined consistency; and
applying a matrix to the surface of the structure or object which provides a substrate
wherein the method is characterised by removing part of the cementitious material by washing away part of the cementitious material such that 30 - 60% of the surface area of glass beads on the surface of the matrix is exposed, hydrochloric acid being used when the washing is performed after hard setting;
adhesive being a mixture of a polymeriser and a silconiser that enhances the adhesion between the glass beads and the cementitious material.

Furthermore, part of the cementitious material is removed by washing the surface prior to full setting of the matrix, or by washing the surface with hydrochloric acid after full setting of the matrix.

According to a preferred embodiment the method for preparing the surface finish comprises the further steps of adding during the mixing step one or more admixtures selected from set retardants, waterproofing agents and set accelerators.

According to a preferred embodiment the aggregate bead/cement ratio is 5:8 or five part beads to 3 parts cement. Alternatively, the bead/cement ratio may be 8:5.

The present invention will now be described in all its aspects and in more detail according to preferred but non-limiting embodiments and with reference to the accompanying illustrations wherein:
Figure 1 shows a structural element including the surface finish according to one embodiment of the invention;
Figure 2 shows the surface finish according to an alternative embodiment of the invention wherein different size glass beads are used; and
Figure 3 shows an alternative embodiment of the finish including other selected aggregates.

According to a preferred embodiment the surface finish of the present invention comprises a matrix of cement, water, an adhesive and glass beads forming the aggregate material.

The adhesive is introduced into the mix with the water to facilitate bonding between the glass beads and the mortar. For this purpose known adhesives may be used such as Xycrylic™ polymeriser mixed with a siliconiser to provide a mechanical locking and thus binding between the beads and the mortar. In utilising the surface finish of the present invention, many variations of aggregate mix can be achieved to provide different aesthetic, bonding and structural effects. The blend proportions and constituents over and above the essential constituents are primarily determined by the particular application of the surface coating and more particularly whether it would be used on a horizontal, vertical or sloping substrate surface. The nature and quality of the substrate material is also a determinant of the mix.

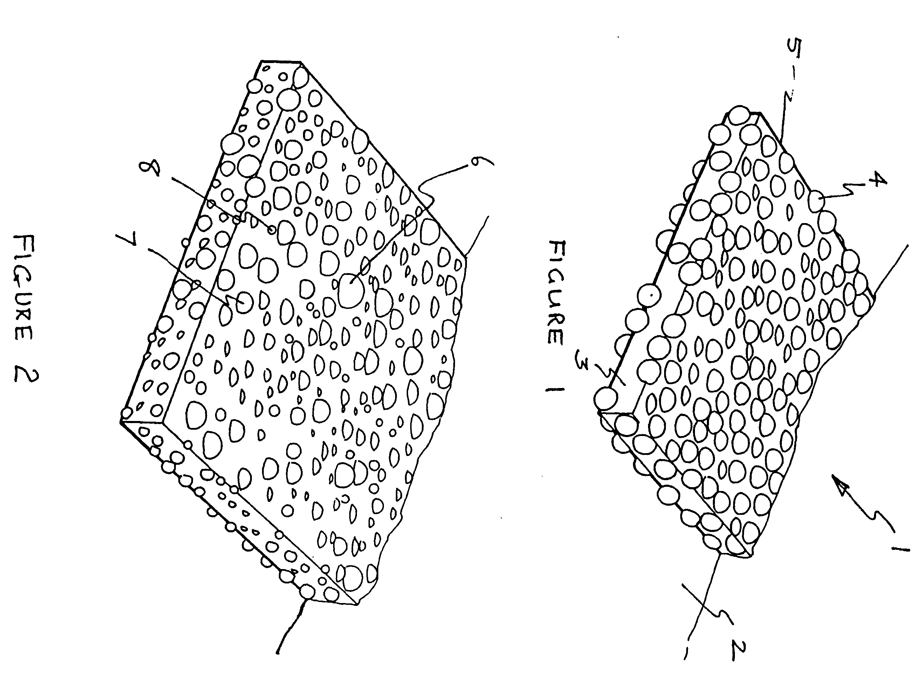

Referring to Figure 1 there is shown a surface finish 1 applied to the surface of a structural element 2. Surface finish 1 comprises a matrix formed from at least a cementitious material 3 and water into which is mixed spherical glass beads 4 which may be of the same or different sizes. The beads fall within a size range 0.1mm to 200mm but the ideal range from which beads would be selected and thus the most commonly used beads would be in the order of 1 to 15mm.

The glass beads provide a large surface area for binding with the cementitious material 3. However, in order to enhance the natural adhesion between the glass beads 4 and cement 3 an adhesive is added which has the effect of chemically abrading or etching the smooth surface of the glass beads to provide proper adhesion. The adhesive is either a powder or liquid comprising a mixture of a siliconiser and a polymeriser. The polymeriser retards the set so to compensate for this, the siliconiser accelerates the set. The polymeriser fortifies the cement mix, increases hardness, durability, bonding capability and chemical resistance to alkalinity bleed from the glass beads. The surface finish is prepared by mixing the cementitous material with the glass beads in a slurry which is formed by adding water and an adhesive. Most of the glass beads are distributed throughout the slurry to ensure consistent structural integrity of the surface finish matrix.

Ideally, the outer surface 5 of the surface finish matrix is formed by glass beads near the surface which sit proud of the cementitous material. Ideally, the surface area presenting to and forming the outside of the surface finish would be 30% to 60% of the surface area of each bead but preferably closer to 60%. Thus, 30% of the beads along the surface 5 would be visible above the surface upon completion of the finish. The proportion of the glass beads which are exposed is determined largely by the amount of washing of the surface prior to final setting of the surface finish. This has the effect of washing away the layer of mortar nearest the outside thereby exposing the glass beads close to the surface of the matrix. The glass beads interlock within the matrix providing resistance against various forces applied to the surface finish such as tensile, compressive or bending forces enhancing the structural integrity of the finish. The interlocking also prevents the tendency of glass beads to spall off from the matrix thereby preserving the integrity of the surface finish. According to a preferred embodiment, the bead sizes throughout the matrix are varied. For instance, for a particular surface finish one may choose beads from the sizes 1, 3, 5, 8, 10, 12 and 15mm whereby the smaller diameter beads would assume the spaces between the larger diameter beads in a given finish thereby enhancing the interlocking between the beads. According to one embodiment, the surface finish would have a ratio of cementitous material to glass beads of 1:1. Alternatively, the ratio would be 5:4. The colour of the cement mortar which is used determines the colour transmitted by the glass beads. As the beads are clear they are internally reflective. If white cement is used, the glass beads tend to reflect a white colour, whereas if a darker cement such as grey is used, the bead reflection would be grey. Thus, the beads reflect the colour of the cement that is used. In another embodiment a mixture of coloured beads may be used so that a mixed colour effect is achieved.

In an alternative embodiment, the matrix is prepared by selecting in addition to the glass beads aggregates selected from earth materials such as semi precious gems, precious gems, sands or quartz, marble and pebble aggregates.

Preferably, beads mixed with other aggregates should be mixed with substantially the same size aggregate as the beads to achieve proper grading within and adequate strength of the matrix. For instance, if a 3mm bead size is chosen as the predominant bead, then if there is to be used an additional aggregate material, a 3mm size aggregate should be chosen. In an alternative embodiment, the proportion of the cementitous material may be greater than the proportion of glass beads by weight with the selection of proportions dictated by the particular application of the surface finish. To enhance adhesion between the glass beads and the cement an adhesive is introduced. In addition to the adhesive, other admixtures are used according to the properties of the surface finish required. The ratio of admixture to cement used would preferably be in the region of 250ml to 40 kg by weight of cement.

The proportions of the mixed constituents which make up the matrix are determined according to the particular application and appearance required for the surface finish. Thus, examples of blends would be 50% glass beads to 50% selected aggregate such as pebbles, 75% glass bead to 25% gem stones, 70% glass bead to 30% gem stones. Bead or aggregate ratio selection depends on the surface finish required. Thus, the ratio is essentially determined by choice for a particular proportion of bead required to be seen prominately on the surface of the mix.

When the surface finish is used in structures in contact with water, a water proofing additive is desirable. The water proofing agent should be of the cementitous crystalline type that chemically controls and permanently fixes non-soluble crystalline growth throughout the capillary voids of the cement. The admixture should be used to permanently waterproof structures either above or below ground where water ingress is a predicted problem. The adhesive may also act as a waterproofing agent. The weight of the admixture per cubic meter of surface finish is determined according to the level of water pressure to which the structure is likely to be subjected. Furthermore, where the waterproofing mixture is used, the amount of water required for the slurry will reduce by 5 to 20 litres per cubic metre depending on the dosage rate and mix design. The water proofing admixture can also act as a set retardant. Thus, when a water proofing admixture is used precautions must be used to adjust the mixture to accommodate the effects that the water proofing admixture has on the matrix. The waterproofing admixture which may also be Xycrilic™ polymeriser also has the advantage of increasing adhesive strength and bonding although in doing this it slightly retards the setting time but as indicated, this is compensated for by the use of a siliconiser which has an accelerating effect on setting of the cement.

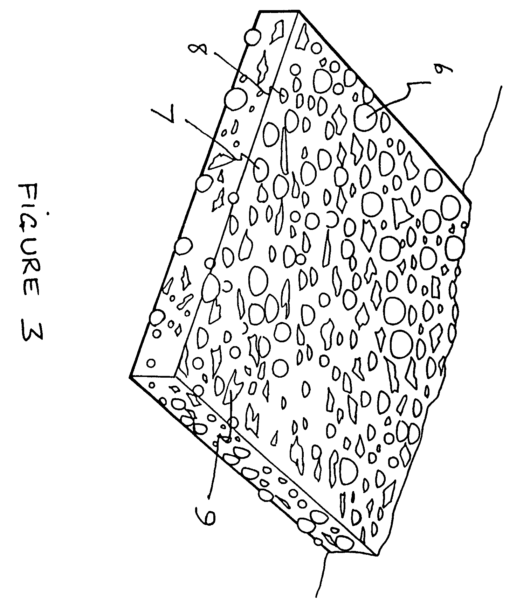

Figure 2 shows an alternative embodiment of the invention this time showing the surface finish containing beads of varying sizes. Thus, beads 6 fall in the upper end of the size range, beads 7 in the middle and beads 8 in the lower end. These beads may be spherical and regular or irregular.

Figure 3 shows the finish formed with beads of different sizes as in figure 2 however, in this embodiment the finish also includes a non glass aggregate 9 blended with aggregates 6, 7 and 8.

According to the method aspect, the invention may be realised by applying various methodological steps according to the selected mixture and application to which the surface finish will be put.

In the most rudimentary form a mix may be achieved by manual hand mixing such as in a bucket or wheelbarrow or by manual mixing on a flat surface. This is suitable for small applications but for larger applications a mechanical mixing device should be used. Preferably, a paddle mixer is used such that the paddles are set off the barrell bin with hard plastic blades attached to the end of the paddle to scrape and clean the bowl. This prevents crushing of the glass and grinding of the beads by the paddles against the barrel resulting in crushing and degradation of the beads. Where a finish is to be applied to a vertical surface, certain additional preparatory steps are required. First the surface of the substrate is laid with a patch coat which seals the substrate material from unwanted bleed out. The patch coat comprises a slurry including a siliconiser, polymeriser, cement and water but no aggregate. This mix must be mixed to the required paste consistency to ensure binding to the substrate. Following this, the full mix is applied comprising cement, water, adhesive and selected glass beads and if required, other aggregates. According to a preferred embodiment of the method aspect, the invention involves the following steps:
a) selecting a suitable cementitous material of a predetermined colouration;
b) selecting glass beads of a size within the range 0.1 to 200mm, mixing an adhesive into water for mixing with the glass beads and cementitous material progressively adding the water to the mix during mixing until a slurry is formed at a predetermined consistency suitable for the selected laying application;
c) applying the matrix so formed to the surface of a structure;
d) allowing the matrix to soft set for a predesignated period;
e) washing away part of the cementitous material such that 30% to 60% of the surface area of a substantial number of glass beads on the finished surface are exposed;
f) allowing the matrix to hard set.

In an alternative embodiment the additives are introduced into the mix at the mixing step which additives are selected from set retardants, waterproofing agents, and adhesives. The nature of the additive selected would be determined according to the application for the surface finish.

According to one embodiment of the method aspect, the mixture may also include the addition of aggregates selected from precious or semi-precious gems, sands crushed quartz, marble or pebbles. These aggregates may be introduced during the early mixing phase when a slurry is formed or alternatively, a selected aggregate may be broadcast on the surface finish just after laying and either before or after washing of the surface to expose the glass beads. The recommended method is however, to mix the aggregate selected with the matrix so the design consistency of the finish is assured.

There are a large variety of applications to which the surface finish may be put. Once the matrix is mixed to the required consistency, it may be applied by hand according to rendering techniques either to horizontal, vertical and indeed surfaces of almost any shape. One application of the finish is in surfacing of swimming pools, in which case waterproofing additives are required to be included in the matrix.

As an alternative to the use of mortar it is possible to utilise vinyl based resins which may either be rolled onto a surface by hand, (called hand laminating) or alternatively sprayed with a suitable gun under air pressure. According to this application the gun sprays the beads, a catalyst and resin at once, leaving the beads to set in the clear finish formed on the surface.

As an alternative to the above described method aspect, it is possible to form tiles once the matrix has mixed and set. Thus, rather than immediately applying the surface finish after the required consistency is achieved upon mixing, the mixture can be placed in a mold and allowed to set thereby forming a tile which can later be used as a surfacing material over a structural or non-structural substrate such as prefabricated or precast panels for use in the building industry including high rise.

Where the surface finish is applied by use of a gun, the surface to which the finish is to be applied has an adhesive membrane applied to its surface to provide support for the glass beads and resin mixture when sprayed on under air pressure.

The beads used in the various applications of the present invention are made of glass. The main ingredient is silica, sand, soda ash and limestone. These are generally weighed during manufacture and mixed with minor ingredients such as metal oxides. The most commonly used beads are made from recycled glass and are spherical or irregularly shaped.

Tinting of the glass beads may be achieved by mixing colouration or by incorporating fine particles of metal such as gold or magnesium in the beads. Gold or magnesium will provide a red bead. Cobalt will provide a blue bead.

Although the preferred shape for the glass beads is spherical it will be appreciated that other shapes may be used in the surface finish according to requirements. Such bead shapes would include for example, elliptical, oval, pear, rectangular, triangular, cylindrical, prismic, hexagonal, octagonal and other prismic shapes.

The methodology of the present invention is particularly adaptable to pre-cast fabrication whereby pre-cast structural members such as concrete panels which are cast in situ in factories may have applied to them the surface finish according to the present invention and its various embodiments. Thus, the surface finish can be applied to building panels which may either be structural or cosmetic, moulded off site and prepared with the surface finish prior to delivery. Apart from structural panels, panels may also be manufactured including the surface finish when used for pavings, slabs, stepping stones, brick and tile pavers, floors, wall decorations.

According to one method of prefabrication, the surface finish is applied while the concrete which forms the pre-fabricated panel is still wet. The bead finish is then applied to the still wet panel enabling the panel and the surface finish to combine in the one setting process. This allows the surface finish to be integral with the setting and enhances the overall structural integrity of the substrate.

Another application of the present invention is in the manufacture of bead sheeting which involves applying the surface finish according to the invention and its embodiments to netting, paper, synthetic, metal wooden or other surface. Once the surface finish sets, the sheeting which forms the substructure surface finish may then be attached to a structure using an adhesive according to the surface to which the sheeting is to be adhered. The bead sheeting or bead netting is applied to an existing structure using polymerised siliconised adhesive. Synthetically based or cementitous based adhesive is used depending on the material or surface to which the sheet is to be adhered. Thus, the surface finish according to the invention and its various embodiments has numerous applications in building and industry. Among the applications are the use of the surface finish for reflective purposes and this is particularly useful in safety applications such as in mines, on roads and roadside structures, airports for runway markings, on entrances to tunnels, platform edging and for outlining structures for night attention. Thus, the substrates to which the surface finish of the present invention may be applied are limited only to those having finish compatible surfaces and include a variety of materials surfaces and objects. Depending upon the substrate material selected, a suitable adhesive is chosen or alternatively the substrate surface is prepared in order to receive and support the glass bead surface finish. The film may also be used in maritime applications for instance, in illuminating dangerous rock outcrops, channel markings, pole markings, ferry wharfs and entrances where reflective materials are required. Yachts, boats, ships, etc. which require permanent reflective safety marking may also have the finish applied. Other maritime applications include marker boys, colour coding of moorings, night illumination of ferry's, private wharfs, pontoons and obstructions in maritime waterways. Other maritime applications include safety markings for wetsuits and surf boards. The glass beading may also be used in furniture applications including table tops, lounges and other items of furniture.

Other building applications include use of the surface finish for driveways, paths, courtyards, interior and exterior floors, garden edging, on retaining walls, stepping stones and other applications where safety is required.

The glass beads are generally supplied by weight in quantities according to predetermined proportions of bead sizes. As an example it is possible to obtain a bag of beads including 10% glass beads, size 1.4mm, 20% bead size 1.7mm and 70% bead size 2mm; as another example, a prepared bag mixture may contain 10% beading at 2.8mm, 20% at 3.3.5mm and 70% at 4mm. In a further example, a mix bag of glass beads may include 10% at 2.3, 6mm, 20% at 2.8mm and 70% at 3.35mm.

## Claims

1. A surface finish (1) for application to a substrate surface (2) of a structure or object such as pathways, swimming pools or the like wherein the surface (2) is disposed vertically, horizontally or is sloped, the surface finish (1) comprising a matrix formed from a combination of a cementitious material (3), water, glass beads (4) and an adhesive;
wherein the glass beads (4) are the same diameter or a blend of at least two different diametric sizes selected from the range 0.1 mm to 200 mm in diameter
the finish (1) being characterised by a proportion of the surface area of the glass beads (4) being hidden in the cementitious material (3) with the remainder visible above the surface such that between 30% - 60% of the surface area of each bead (4) is visible above the surface of the cementitious material (3); said adhesive comprising a blend of a polymeriser and a siliconiser that enhances the adhesion between glass beads (4) and cementitious material (3) said glass beads (4) interlocking proximate adjacent beads (4) within the matrix so as to provide resistance against abrasion and tensile, bending and compression forces applied to said matrix by such influences as human and vehicular traffic.

2. A surface finish (1) according to claim 1, wherein the beads (4) are graded within the matrix and are selected from sizes approximating 1, 3, 5, 8, 10, 12 and 15 mm in diameter.

3. A surface finish (1) according to claim 2, wherein the cementitious material (3) / glass bead (4) ratio is 1:1.

4. A surface finish (1) according to claim 3, wherein the proportion of glass beads (4) within the matrix is greater than the proportion of cementitious material (3).

5. A surface finish according to claim 4, wherein the proportion of cementitious material (3) is greater than the proportion of glass beads (4).

6. A surface finish according to claim 5, wherein the proportion of cementitious material (3) to glass beads (4) is 8:5.

7. A surface finish (1) according to claims 4, 5 or 6, further comprising aggregate selection from the group comprising semi precious gems, sands or crushed quartz, marble or pebble.

8. A surface finish (1) according to claim 7, wherein the matrix also comprises an additive or additives selected from the group consisting of polymers, set retardants, set accelerators and waterproofing agents.

9. A surface finish (1) according to claim 8, wherein the finish thickness falls within the range of 1 mm to 150 mm.

10. A method of preparing a surface finish (1) on the surface of a structure or object such as a road, and a runway or the like wherein the surface (2) is disposed vertically, horizontally or is sloped, comprising the steps of;
selecting a cementitious material (3); selecting glass beads (4) from within the size range of 0.1 mm to 200 mm diameter; mixing the cementitious material (3) with the selected bead sizes, water and an adhesive to form a matrix of a predetermined consistency; and
applying the matrix to the surface of the structure or object which provides a substrate
wherein the method is characterised by removing part of the cementitious material (3) by washing away part of the cementitious material such that 30 - 60% of the surface area of glass beads (4) on the surface of the matrix is exposed, hydrochloric acid being used when the washing is performed after hard setting;
the adhesive being a mixture of a polymeriser and a silconiser that enhances the adhesion between the glass beads (4) and the cementitious material (3).

11. A method for preparing a surface finish (1) according to claim 10, comprising the further steps of adding during the mixing step one or more admixtures selected from set retardants, waterproofing agents and set accelerators.

12. A method according to claim 11 comprising the further step of:
a) selecting an additional aggregate/s from the group of precious or semi-precious gems, sands or crushed quartz, marble or pebbles,
b) broadcasting the selected aggregate/s into the mix following a washing phase of the application of the surface finish.

## Patentansprüche

1. Oberflächendeckauftrag (1) zum Aufbringen auf eine Substratoberfläche (2) von einer Konstruktion oder einem Objekt, wie beispielsweise auf Wege, Schwimmbecken oder dergleichen, wobei die Oberfläche (2) vertikal, horizontal angeordnet ist oder schräg ist, wobei der Oberflächendeckauftrag (1) eine aus einer Kombination von einem zementartigen Material (3), Wasser, Glasperlen (4) und einem Kleber gebildete Matrix umfasst;
wobei die Glasperlen (4) vom selben Durchmesser oder eine Mischung von mindestens zwei verschiedenen Durchmessergrößen sind, die aus dem Bereich 0,1 mm bis 200 mm Durchmesser ausgewählt sind,
wobei der Deckauftrag (1) dadurch gekennzeichnet ist, dass ein Anteil der Oberfläche der Glasperlen (4) im zementartigen Material (3) verborgen ist, wobei der Rest über der Oberfläche sichtbar ist, so dass zwischen 30 % - 60 % der Oberfläche jeder Perle (4) über der Oberfläche des zementartigen Materials (3) sichtbar ist; wobei der Kleber eine Mischung von einem Polymerisationsmittel und einem Siliconisierungsmittel umfasst, welche die Haftung zwischen Glasperlen (4) und zementartigem Material (3) verbessert, wobei sich die Glasperlen (4) in der Nähe von benachbarten Perlen (4) in der Matrix verzahnen, so dass sie für einen Widerstand gegen Abrieb sowie Zug-, Biege- und Druckkräfte sorgen, die durch solche Einflüsse, wie Menschen- und Kraftfahrzeugverkehr auf die besagte Matrix aufgebracht werden.

2. Oberflächendeckauftrag (1) nach Anspruch 1, bei dem die Perlen (4) in der Matrix klassiert sind und aus Größen von annähernd 1, 3, 5, 8, 10, 12 und 15 mm Durchmesser ausgewählt sind.

3. Oberflächendeckauftrag (1) nach Anspruch 1, bei dem das Verhältnis von zementartigem Material (3) / Glasperlen (4) 1:1 beträgt.

4. Oberflächendeckauftrag (1) nach Anspruch 3, bei dem der Anteil von Glasperlen (4) in der Matrix größer als der Anteil von zementartigem Material (3) ist.

5. Oberflächendeckauftrag (1) nach Anspruch 4, bei dem der Anteil von zementartigem Material (3) größer als der Anteil von Glasperlen (4) ist.

6. Oberflächendeckauftrag (1) nach Anspruch 5, bei dem der Anteil von zementartigem Material (3) zu Glasperlen (4) 8:5 beträgt.

7. Oberflächendeckauftrag (1) nach den Ansprüchen 4, 5 oder 6, weiter umfassend eine Auswahl an Zuschlagstoffen aus der Gruppe umfassend Halbedelsteine, Sande oder gebrochenen Quarz, Marmor oder Kiesel.

8. Oberflächendeckauftrag (1) nach Anspruch 7, bei dem die Matrix auch ein Additiv oder Additive umfasst, die aus der aus Polymeren, Abbindeverzögerern, Abbindebeschleunigern und Imprägnierungsmitteln bestehenden Gruppe ausgewählt sind.

9. Oberflächendeckauftrag (1) nach Anspruch 8, bei dem die Deckauftragstärke in den Bereich von 1 mm bis 150 mm fällt.

10. Verfahren zur Herstellung eines Oberflächendeckauftrags (1) auf der Oberfläche einer Konstruktion oder eines Objekts, wie beispielsweise einer Straße und einer Start- und Landebahn oder dergleichen, wobei die Oberfläche (2) vertikal, horizontal angeordnet ist oder schräg ist, umfassend die Schritte:
Auswählen eines zementartigen Materials (3), Auswählen von Glasperlen (4) aus dem Größenbereich von 0,1 mm bis 200 mm Durchmesser; Vermischen des zementartigen Materials (3) mit den ausgewählten Perlengrößen, Wasser und einem Kleber, um eine Matrix mit einer vorbestimmten Konsistenz zu bilden; und
Aufbringen der Matrix auf die Oberfläche der Konstruktion oder des Objekts, die/das ein Substrat liefert,
wobei das Verfahren dadurch gekennzeichnet ist, dass ein Teil des zementartigen Materials (3) durch Wegwaschen eines Teils des zementartigen Materials entfernt wird, so dass 30 - 60 % der Oberfläche von Glasperlen (4) an der Oberfläche der Matrix freigelegt wird, wobei Salzsäure verwendet wird, wenn das Waschen nach dem Aushärten durchgeführt wird;
wobei der Kleber eine Mischung von einem Polymerisationsmittel und einem Siliconisierungsmittel ist, welche die Haftung zwischen den Glasperlen (4) und dem zementartigen Material (3) verbessert.

11. Verfahren zur Herstellung eines Oberflächendeckauftrags (1) nach Anspruch 10, umfassend die weiteren Schritte eines Hinzufügens von einer oder mehreren, aus Abbindeverzögerern, Imprägnierungsmitteln und Abbindebeschleunigern ausgewählten Beimengungen während des Vermischungsschrittes.

12. Verfahren nach Anspruch 11, umfassend den weiteren Schritt:
a) Auswählen eines zusätzlichen Zuschlagstoffs / von zusätzlichen Zuschlagstoffen aus der Gruppe von Edel- oder Halbedelsteinen, Sanden oder gebrochenem Quarz, Marmor oder Kieseln,
b) Verteilen des/der ausgewählten Zuschlagstoffs/ Zuschlagstoffe in der Mischung im Anschluss an eine Waschphase des Aufbringens des Oberflächendeckauftrags.

## Revendications

1. Revêtement de surface (1) pour une application à la surface d'un substrat (2) d'une structure ou d'un objet tel que des chemins d'accès, des piscines ou analogue, dans lequel la surface (2) est disposée verticalement, horizontalement ou est en pente, le revêtement de surface (1) comprenant une matrice formée à partir d'une combinaison d'une matière cimentaire (3), d'eau, de billes de verre (4) et d'un adhésif;
dans lequel les billes de verre (4) ont un diamètre identique ou un mélange d'au moins deux tailles de diamètre différents choisis dans la gamme de 0,1 mm à 200 mm de diamètre
le revêtement (1) étant caractérisé par une proportion de la surface des billes de verre (4) qui est cachée dans la matière cimentaire (3) avec la partie restante visible au-dessus de la surface telle que 30% à 60% de la surface de chaque bille (4) est visible au-dessus de la surface de la matière cimentaire(3); ledit adhésif comprenant un mélange d'un agent de polymérisation et d'un agent silicone qui améliore l'adhérence entre les billes de verre (4) et la matière cimentaire (3), lesdites billes de verre (4) bloquant les billes adjacentes les plus proches (4) dans la matrice de façon à fournir une résistance contre l'abrasion et la tension, les forces de flexion et de compression appliquées à ladite matrice par des causes telles que le trafic piétonnier ou de véhicules.

2. Revêtement de surface (1) selon la revendication 1, dans lequel les billes (4) sont calibrées dans la matrice et sont choisies parmi des tailles d'approximativement 1, 3, 5, 8, 10, 12 et 15 mm de diamètre.

3. Revêtement de surface (1) selon la revendication 2, dans lequel le rapport matière cimentaire (3)/billes de verre (4) est 1:1.

4. Revêtement de surface (1) selon la revendication 3, dans lequel la proportion des billes de verre (4) dans la matrice est plus grande que la proportion de matière cimentaire (3).

5. Revêtement de surface (1) selon la revendication 4, dans lequel la proportion de la matière cimentaire (3) est plus grande que la proportion de billes de verre (4).

6. Revêtement de surface (1) selon la revendication 5, dans lequel la proportion de matière cimentaire (3) par rapport au billes de verre (4) est de 8:5.

7. Revêtement de surface (1) selon les revendications 4, 5 ou 6, comprenant de plus une sélection d'agrégat choisi dans le groupe formé par les gemmes semi-précieuses, les quartz sableux ou concassés, le marbre ou les gravillons.

8. Revêtement de surface (1) selon la revendication 7, dans lequel la matrice comprend également un additif ou des additifs choisis dans le groupe formé par les polymères, les retardateurs de prise, les accélérateurs de prise et les agents imperméabilisants.

9. Revêtement de surface (1) selon la revendication 8, dans lequel l'épaisseur du revêtement se situe dans la gamme de 1 mm à 150 mm.

10. Procédé pour préparer un revêtement de surface (1) sur la surface d'une structure ou d'un objet tel qu'une route et un chemin de roulement ou analogue où la surface est disposée verticalement, horizontalement ou est inclinée, comprenant les étapes consistant:
à choisir une matière cimentaire (3); à choisir des billes de verre (4) d'une taille dans la gamme de 0,1 mm à 200 mm de diamètre; à mélanger la matière cimentaire (3) avec les billes de taille choisie, de l'eau et un adhésif pour former une matrice d'une consistance prédéterminée; et
à appliquer la matrice à la surface de la structure ou de l'objet qui fournit un substrat
dans lequel le procédé est caractérisé par l'élimination d'une partie de la matière cimentaire (3) en éliminant par lavage une partie de la matière cimentaire de sorte que 30 à 60% de la surface des billes de verre (4) sur la surface de la matrice soient dégagés, l'acide chlorhydrique étant utilisé quand le lavage est effectué après durcissement;
l'adhésif étant un mélange d'un agent de polymérisation et d'un agent silicone qui améliorent l'adhérence entre les billes de verre (4) et la matière cimentaire (3).

11. Procédé pour préparer un revêtement de surface (1) selon la revendication 10, comprenant les étapes supplémentaires consistant à ajouter pendant l'étape de mélange un ou plusieurs adjuvants choisis parmi les retardateurs de prise, les agents imperméabilisants et les accélérateurs de prise.

12. Procédé selon la revendication 11 comprenant l'étape supplémentaire consistant:
a) à choisir un ou des agrégats supplémentaires dans le groupe formé par les gemmes semi-précieuses, les quartz sableux ou concassés, leu marbre ou les gravillons,
b) à répandre le ou les agrégats choisis dans le mélange à la suite de la phase de lavage de l'application de la surface de revêtement.
